# EUROPÄISCHE PATENTSCHRIFT

(11) **EP 1 319 822 B1**
(45) Veröffentlichungstag und Bekanntmachung des Hinweises auf die Patenterteilung: **15.08.2007**
(21) Anmeldenummer: 01129782.7
(22) Anmeldetag: 14.12.2001
(51) Int. Cl.: F02F 1/24, F02F 1/38

(54) **Brennkraftmaschine mit Direkteinspritzung**
Combustion engine with direct injection
Moteur à combustion avec injection directe

(43) Veröffentlichungstag der Anmeldung: 18.06.2003
(73) Patentinhaber: Ford Global Technologies, LLC, Dearborn, MI 48126 (US)
(72) Erfinder: Wirth, Martin, 42853 Remscheid (DE)
(74) Vertreter: Drömer, Hans-Carsten

(56) Entgegenhaltungen:
- EP-A- 0 694 682
- EP-A- 0 889 225
- EP-A- 1 048 833
- EP-A- 1 148 226
- DE-A- 3 019 330
- JP-A- 1 110 827
- US-A- 5 785 028
- US-A- 6 076 498
- US-B1- 6 170 457

## Beschreibung

Die Erfindung betrifft eine Brennkraftmaschine mit Direkteinspritzung, enthaltend
- mindestens einen Zylinder und einen darin angeordneten Kolben, wobei der Zylinder und der Kolben gemeinsam eine Brennkammer begrenzen;
- mindestens einen Lufteinlaß, welcher derart ausgebildet und am Zylinder angeordnet ist, daß eine vorzugsweise geneigte Swirl-Bewegung der Einlaßluft in der Brennkammer entsteht;
- einen zentral an der Oberseite der Brennkammer angeordneten Kraftstoffinjektor zum Einspritzen eines Kraftstoffstrahls, dessen Flüssigkeitsteilchen ein Einspritzvolumenbestimmen;
- eine zentral an der Oberseite der Brennkammer angeordnete Zündeinrichtung, deren Elektroden außerhalb des Einspritzvolumens des Kraftstoffinjektors liegen.

Ferner betrifft die Erfindung ein Verfahren zur Erzeugung eines Luft-Kraftstoff-Gemisches in einer von einem Zylinder und einem Kolben begrenzten Brennkammer einer Brennkraftmaschine mit Direkteinspritzung, der gemäss Anspruch 7, erster Teil.

Aus dem Stand der Technik ist ein benzinbetriebener Viertaktmotor mit Direkteinspritzung bekannt, bei dem ein geschichteter Magerbetrieb möglich ist. Mit einem derartigen Betrieb können die Pumpverluste des Motors reduziert und daher - im Vergleich zu einer herkömmlichen Motortechnologie mit Saugrohreinspritzung und einem homogenen stöchiometrischen Betrieb - erhebliche Verbesserungen hinsichtlich der Kraftstoffausnutzung erzielt werden. Für derartige Brennkraftmaschinen sind verschiedene Konstruktionsprinzipien bekannt, die sich hinsichtlich der Systemkomponenten unterscheiden. Zu den Unterschieden gehören zum Beispiel die Anordnung der Einspritzeinrichtungen und der Zündeinrichtungen, die Anzahl der Einlaß- und Auslaßventile, die geometrische Form der Brennkammer und des Kolbens, sowie die mit Hilfe der Form des Einlaßkanals erzeugte Luftbewegung in der Brennkammer.

In Abhängigkeit von der Anordnung der Komponenten und dem Verfahren zur Bildung des geschichteten Kraftstoff-Luft-Gemisches werden Verbrennungssysteme als wandgeführte, luftgeführte oder strahlgeführte Systeme klassifiziert. Die derzeit in der Produktion befindlichen Systeme stellen üblicherweise wandgeführte Systeme mit einer zentral angeordneten Zündkerze und einem seitlich angebrachten Injektor dar. Der Kraftstoffstrahl wird durch die Wände beziehungsweise eine Vertiefung im Kolben an den Ort der Zündung geleitet, was eine Reihe von Kompromissen hinsichtlich der Zeitsteuerung der Einspritzung und der Zündung sowie daraus resultierende Verluste im thermischen Wirkungsgrad des Motors verursacht.

Dieselbe Anordnung wird für luftgeführte Systeme verwendet, bei welchen ein direktes Auftreffen des eingespritzten Kraftstoffstrahls auf die Oberfläche des Kolbens verhindert werden soll. Zu diesem Zweck wird der eingespritzte Kraftstoff strahl durch die Luftbewegung im Zylinder zum Zündort abgelenkt. Derartige Systeme sind jedoch schwierig zu optimieren, da die Luftbewegung stets hochgradig turbulent ist und von der Motordrehzahl abhängt.

Den konsequentesten Ansatz stellen strahlgeführte Systeme dar, bei denen die Zündkerze in unmittelbarer Nachbarschaft des Injektors angeordnet ist. Ein derartiges strahlgeführtes System ist z. B. aus der US 5 941 207 bekannt. Das geschichtete Gemisch erreicht hierbei den Zündort durch die Einspritzstrahlausbreitung unabhängig von der Geometrie der Brennkammer und der Luftbewegung. Dies ermöglicht den höchsten thermischen Wirkungsgrad eines ungedrosselten mageren Benzin-Verbrennungsprozesses sowie minimierte Abgasemissionen. Ein grundlegendes Problem dieses Ansatzes besteht jedoch in der Haltbarkeit des Kraftstoffinjektors und der Zündeinrichtung aufgrund der Bildung von Ablagerungen auf den Elektroden der Zündeinrichtung sowie einer Verkokung des Injektors durch unzureichende Kühlung.

Die JP 01110827 A zeigt eine Diesel-Brennkraftmaschine mit Direkteinspritzung, bei der eine Einspritzdüse mit einer Vielzahl radial ausgerichteter, am Außenumfang der Einspritzdüse angebrachter Düsenbohrungen versehen ist. Die Düsenbohrungen weisen bezogen auf eine Mittellängsachse der Einspritzdüse, die einer Rotationsachse einer Swirl-Bewegung der in den Brennraum einströmenden Ansaugluft entspricht, in Rotationsrichtung der Swirl-Bewegung zunehmend größere Düsenbohrungen auf und sind mit in Rotationsrichtung der Swirl-Bewegung zunehmend größeren Winkeln zueinander ausgerichtet. Eine erste Düsenbohrung ist derart gegenüber einer im Brennraum vorgesehenen Zündkerzenelektrode angeordnet, dass ein aus dieser Düsenbohrung austretender Kraftstoffstrahl unmittelbar in Richtung der Zündkerzenelektrode aus der Einspritzdüse austritt.

Die EP 0 694 682 A1 zeigt eine Brennkraftmaschine mit Direkteinspritzung, bei der eine Einspitzdüse seitlich an einem Brennraum angeordnet ist, während eine Zündkerzenelektrode zentral an einer Oberseite des Brennraums angeordnet ist. Der Brennraum ist abschnittsweise von einer Vertiefung in einer Oberfläche eines Kolbens begrenzt. Diese Vertiefung im Kolben weist in einer Umlaufrichtung betrachtet eine Abfolge von gekrümmten und geraden Wandabschnitten auf, um eine bei einer Swirl-Bewegung der Ansaugluft eine gezielte Zuführung von Kraftstoffteilchen bzw. Kraftstoffnebel zu der Zündkerze zu gewährleisten.

Vor diesem Hintergrund war es Aufgabe der vorliegenden Erfindung, eine verbesserte Brennkraftmaschine und ein verbessertes Verfahren zur Erzeugung eines Luft-Kraftstoff-Gemisches zu schaffen, welche bzw. welches eine höhere Lebensdauer und Funktionstüchtigkeit der beteiligten Bauteile gewährleistet.

Diese Aufgabe wird durch eine Brennkraftmaschine mit den Merkmalen des Anspruchs 1 sowie durch ein Verfahren mit den Merkmalen des Anspruchs 7 gelöst.

Vorteilhafte Ausgestaltungen sind in den Unteransprüchen enthalten.

Die erfindungsgemäße Brennkraftmaschine mit Direkteinspritzung enthält mindestens einen Zylinder mit seitlichen Zylinderwänden und einem Zylinderkopf sowie einem im Zylinder angeordneten Kolben, wobei der Kolben und der Zylinder gemeinsam eine Brennkammer begrenzen. Die Brennkammer weist mindestens einen Lufteinlaß auf, welcher derart ausgebildet und am Zylinder angeordnet ist, daß beim Einströmen von Einlaßluft eine Swirl-Bewegung der Einlaßluft in der Brennkammer entsteht, die vorzugsweise geneigt ist. Eine Swirl-Bewegung ist durch einen um die Zylinderachse beziehungsweise Hubachse des Kolbens rotierenden Wirbel gekennzeichnet.

Weiterhin sind bei der Brennkraftmaschine an der Oberseite der Brennkammer, d.h. im Zylinderkopf, zentral ein Kraftstoffinjektor zum Einspritzen eines Kraftstoffstrahls, dessen Flüssigkeitsteilchen ein Einspritzvolumen begrenzen, sowie eine Zündeinrichtung angeordnet, wobei die Elektroden der Zündeinrichtung außerhalb des genannten Einspritzvolumens des Kraftstoffinjektors liegen. Die Elektroden werden daher nicht direkt vom eingespritzten Kraftstoff getroffen. Das Einspritzvolumen ist als der Raumbereich definiert, welcher von den Flüssigkeitsteilchen des eingespritzten Kraftstoffes erreicht wird. Die Brennkraftmaschine ist dadurch gekennzeichnet, daß das genannte Einspritzvolumen bezogen auf eine Achse des Kraftstoffinjektors asymmetrisch ist, wobei das Einspritzvolumen ferner derart geformt und innerhalb der Brennkammer ausgerichtet ist, daß die Elektroden der Zündeinrichtung in einem vom während und nach der Einspritzung aus verdampfendem Kraftstoff entstehenden Kraftstoffnebel eingenommenen Volumen liegen.

Die in der vorstehend geschilderten Weise ausgestaltete Brennkraftmaschine weist den Vorteil einer hohen Lebensdauer auf, da Rußablagerungen an der Zündeinrichtung und eine Verkokung des Kraftstoffinjektors verhindert bzw. minimiert werden. Dies geschieht zum einen dadurch, daß die Zündeinrichtung nicht direkt von Kraftstofftropfen getroffen wird, weil sie mit ihren Elektroden außerhalb des Einspritzvolumens liegt. Gleichzeitig wird jedoch eine sichere und robuste Zündung des Luft-Kraftstoff-Gemisches sichergestellt, da die Elektroden in einem Bereich angeordnet sind, welcher vom Kraftstoffnebel eingenommenen wird.

Vorzugsweise sind die Elektroden der Zündeinrichtung in einem Bereich angeordnet, welcher bei einer Rotation des asymmetrischen Einspritzvolumens um die Zylinderachse beziehungsweise Hubachse des Kolbens überstrichen wird. Eine derartige Rotation des Einspritzvolumens wird durch die Swirl-Bewegung der Einlaßluft, die durch die Ausgestaltung des Lufteinlasses erzeugt wird, sichergestellt.

Die Oberseite der Brennkammer, d.h. der Zylinderkopf, kann gemäß einer Weiterbildung der Erfindung die Form eines Daches aufweisen. Diese Form des Zylinderkopfes erlaubt in günstiger Weise die Unterbringung der Einspritzeinrichtung und der Zündeinrichtung.

Weiterhin kann die Oberseite des Kolbens eine muldenförmige Vertiefung aufweisen, welche in vorteilhafter Weise dazu dient, den eingespritzten Kraftstoff umzulenken und in der Brennkammer zu verteilen.

Gemäß einer Weiterbildung der Erfindung weist der mindestens eine Zylinder der Brennkraftmaschine mindestens ein Einlaßventil sowie mindestens ein Auslaßventil auf, wobei die genannten Ventile von einer Steuerung derart angesteuert werden, daß ein Betrieb der Brennkraftmaschine mit einer inneren Abgasrückführung möglich ist. Bei der Steuerung kann es sich insbesondere um eine variable Nockenwellensteuerung handeln, welche eine Verschiebung der Öffnungs- und/oder Schließzeiten der Ventile in Richtung einer Verzögerung und/oder einer Vorverlagerung erlaubt. Bei der inneren Abgasrückführung wird durch ein spätes Schließen der Auslaßventile dafür gesorgt, daß ein Teil der verbrannten Abgase in die Brennkammer zurückströmen kann, um dort günstigere Bedingungen für den nachfolgenden Arbeitstakt zu erzeugen.

Ferner kann der Kraftstoffinjektor an der Oberseite der Brennkammer innerhalb des Zylinderkopfes von einem Kühlmittelmantel umgeben sein. Eine derartige vollständige Umschließung des Kraftstoffinjektors mit einem Kühlmittelmantel ist insbesondere auch durch die asymmetrische Form des Einspritzvolumens möglich, welche ihrerseits einen geneigten Einbau des Kraftstoffinjektors erlaubt. Hierdurch entstehen dann der benötigte Platz und Abstand von der Zündeinrichtung für den Kühlmittelmantel. Die gute Kühlung des Kraftstoffinjektors verhindert wiederum in vorteilhafter Weise eine Verkokung des Kraftstoffinjektors und damit dessen frühzeitigen Verschleiß.

Die Erfindung betrifft ferner ein Verfahren zur Erzeugung eines Luft-Kraftstoff-Gemisches in einer von einem Zylinder und einem Kolben begrenzten Brennkammer einer Brennkraftmaschine mit Direkteinspritzung, wobei durch einen der Brennkammer zugeordneten Lufteinlass in der Brennkammer eine vorzugsweise geneigte Swirl-Bewegung erzeugt wird, und wobei mittels eines zentral an de Oberseite der Brennkammer angeordneten Kraftstoffinjektors ein Kraftstoffstrahl, dessen Flüssigkeitsteilchen ein Einspritzvolumenbegrenzen, in die Brennkammer eingespritzt wird. Das Verfahren ist dadurch gekennzeichnet, daß das Einspritzvolumen bezogen auf eine Achse des Kraftstoffinjektors asymmetrisch ist und die Elektroden einer Zündeinrichtung außerhalb des Einspritzvolumens in einem von einer Umhüllenden des vom verdampften Kraftstoff als Kraftstoffnebel eingenommenen Volumen liegen. Vorzugsweise liegen die Elektroden in einem Bereich, den das Einspritzvolumen bei einer Rotation um die Zylinderachse überstreicht.

Das Verfahren erzielt den in Zusammenhang mit der Brennkraftmaschine bereits erläuterten Vorteil, daß einerseits die Elektroden nicht direkt vom Kraftstoffstrahl getroffen werden, und daß andererseits eine ordnungsgemäße Zündung des eingespritzten Kraftstoffes sichergestellt ist, da das Einspritzvolumen durch die Verdampfung und/oder die Swirl-Bewegung der Einlaßluft um die Zylinderachse in den Bereich der Zündung gelangt.

Bei dem genannten Verfahren kann insbesondere in der Brennkammer ein geschichtetes Luft-Kraftstoff-Gemisch erzeugt werden. Ein derartiges geschichtetes Gemisch ermöglicht hohe, zündfähige Kraftstoffkonzentrationen im Bereich der Zündeinrichtung, während das restliche Volumen der Brennkammer mit einem Gemisch geringerer Kraftstoffkonzentration gefüllt ist. Dies erlaubt insbesondere einen effizienten Magerbetrieb der Brennkraftmaschine.

Gemäß einer Weiterbildung des Verfahrens wird während des Ansaugtaktes der Brennkraftmaschine eine erste Kraftstoffmenge zur Erzeugung einer homogenen Luft-Kraftstoff-Mischung in die Brennkammer injiziert, und während des anschließenden Kompressionstaktes wird eine zweite Kraftstoffmenge zur Erzeugung einer geschichteten Mischung injiziert. Die Aufteilung der gesamten injizierten Kraftstoffmenge in zwei Teile stellt einen zusätzlichen Parameter zur Steuerung des Motorbetriebes bereit. Dieser kann in vorteilhafter Weise ausgenutzt werden, um den Betrieb der Brennkraftmaschine zu optimieren.

Des weiteren wird das Verfahren vorzugsweise derart ausgeführt, daß bei allen Betriebsweisen der Brennkraftmaschine die gleichen Strömungsverhältnisse in der Brennkammer erzeugt werden. Diese Strömungsverhältnisse lassen sich durch konstruktiv verhältnismäßig einfache und unveränderliche Maßnahmen festlegen, so daß insgesamt ein kostengünstiger und robuster Aufbau der Brennkraftmaschine erzielt werden kann.

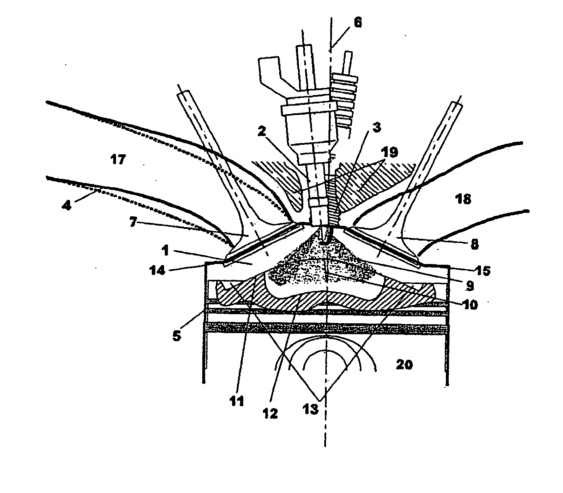

Im Folgenden wird die Erfindung anhand der Zeichnung beispielhaft näher erläutert.

Die einzige Figur zeigt einen Querschnitt durch den Einlaßbereich eines Zylinders einer erfindungsgemäßen Brennkraftmaschine. und ab bewegliche Kolben 20 begrenzen gemeinsam die Brennkammer 1. Vorzugsweise sind im Zylinderkopf zwei Einlaßventile 7 und zwei Auslaßventile 8 angeordnet, von denen in der Figur jeweils nur eines erkennbar ist. Das Einlaßventil 7 sitzt am Ende des Ansaugkanals 17, während das Auslaßventil 8 den Eingang des Abgaskanals 18 verschließt.

Die Geometrie des Einlasses 4 ist vorzugsweise feststehend, d.h., es gibt keine variablen Dralleinrichtungen oder dgl.. Der Einlaß 4 ist vielmehr derart konstruiert, daß eine ausgeprägte Luftbewegung im Zylinder 5 erzeugt wird, die aus einer starken Tumble-Strömung und einer schwachen Swirl-Bewegung während des Ansaugtaktes besteht. Die Tumble-Strömung ist durch Wirbel mit einer Rotationsachse senkrecht zur Zylinderachse 6 gekennzeichnet und wird derart ausgelegt, daß diese während der Kompression in kleinere Turbulenzen aufbricht. Die Swirl-Bewegung, d.h. ein Wirbel um die Zylinderachse 6, soll dagegen während der Kompression aufrecht erhalten werden, um die beabsichtigte Erzeugung einer geschichteten Ladung in der Brennkammer 1 zu unterstützen.

Ungefähr im Zentrum des Zylinderkopfes sind ein Kraftstoffinjektor 2 und eine Zündkerze 3 angeordnet. Diese Anordnung erlaubt einen maximalen Durchmesser für die Einlaßventile 7 und die Auslaßventile 8.

Der Kraftstoffinjektor 2 ist derart ausgestaltet, daß er eine besondere Anordnung und Form des Einspritzvolumens 9 erzeugt, die eine bestmögliche Zusammenwirkung mit der Zündeinrichtung 3 gewährleistet. Das Einspritzvolumen 9 ist als der Raumbereich definiert, welcher von den Flüssigkeitsteilchen des eingespritzten Kraftstoffs auf direktem Weg erreicht wird. Dieses Einspritzvolumen 9 ist erfindungsgemäß asymmetrisch in Bezug auf die Verteilung des Kraftstoffstrahls innerhalb eines Querschnittes durch den Einspritzstrahl senkrecht zur Achse des Einspritzstrahls beziehungsweise des Injektors 10 geformt. Die Asymmetrie ist speziell derart gestaltet, daß der Ort der Zündung, d.h. der Ort der Elektroden der Zündkerze 3, innerhalb der gesamten Umhüllenden des entstehenden Kraftstoffnebels lokalisiert ist, so daß dieser sicher vom verdampften Kraftstoff erreicht wird, jedoch niemals vom flüssigen Kraftstoff direkt getroffen wird.

Die Zusammenwirkung zwischen dem injizierten Kraftstoffstrahl und der Luftbewegung, die durch den Einlaß 4 erzeugt wird (Swirl-Bewegung), ermöglicht eine schnelle Verteilung des verdampften Kraftstoffs innerhalb des Mischungsvolumens.

Die Oberseite des Kolbens 20 zeichnet sich durch einen besonders ausgestalteten Verlauf 11 mit einer zentralen Mulde 12 aus, die zur Aufnahme der geschichteten Ladung, die durch die Einspritzeinrichtung 2 erzeugt wird, und zur Umlenkung der sich ausbreitenden Strahlspitzen zurück in das zentrale Mischungsvolumen im Falle eines sehr weit reichenden Strahlvordringens dient. Die Mulde 12 im Kolben 20 erlaubt ferner ein maximales freies Eindringen des Kraftstoffstrahls ohne Auftreffen auf eine Wand. Weiterhin weist die Oberseite des Kolbens Aussparungen 13 auf, welche Platz für das Einlaßventil 7 bzw. das Auslaßventil 8 schaffen, mittels derer die gewünschten Variationen der Nockenwellensteuerung ermöglicht werden.

Quetschflächen (squish surfaces) sind an der Seite des Einlasses 14 und des Auslasses 15 sowie im Bereich des Daches angeordnet, um bessere homogene Verbrennungscharakteristiken zu gewährleisten. Die Tumble-Komponente der durch den Einlaß 4 erzeugten Luftbewegung im Zylinder wird hierdurch besser in Turbulenzen umgewandelt, um eine verbesserte Homogenisierung der Mischung und eine erhöhte Verbrennungsrate zu erzielen.

Weiterhin sind der Ansaugkanal 17 und der Abgaskanal 18 derart konstruiert und geformt, daß diese die Bereitstellung eines optimierten Kühlwassermantels 19 um den zentral angeordneten Kraftstoffinjektor 2 erlauben. Ferner besteht ein offener Zugang der Luftbewegung zur Spitze des Kraftstoffinjektors 2, um eine ordnungsgemäße Reinigung des Bereiches der Spitze zu ermöglichen und die Bildung von Ablagerungen zu verhindern.

Die Figur zeigt somit insgesamt eine Brennkraftmaschine mit Direkteinspritzung und einer zentralen Anordnung des Kraftstoffinjektors 2 und der Zündeinrichtung 3 in einer Brennkammer 1 mit einem Dach, wobei die Injektionseinrichtung 2 den Kraftstoff in Form eines verteilten Sprays bzw. Sprühnebels injiziert und die Einlaßventile 7 eine Einlaßströmung in den Zylinder 5 bereitstellen, welcher eine geneigte Swirl-Bewegung im Zylinder erzeugt, und wobei die Einlaß- und Auslaßventile des Motors durch eine variable Nockenwellensteuerung betätigt werden, durch die eine innere Abgasrückführung ermöglicht wird. Wichtig für die Brennkraftmaschine ist, daß ein Kraftstoffstrahl für eine geschichtete Kraftstoffeinspritzung mit einer asymmetrischen Form vorliegt, bei der die Zündeinrichtung 3 innerhalb der allgemeinen Umhüllenden des erzeugten Kraftstoffnebels liegt, jedoch verhindert wird, daß die Zündeinrichtung direkt dem Auftreffen flüssigen Kraftstoffs aus dem Kraftstoffstrahl ausgesetzt ist.

Wie in der Figur dargestellt ist, wird die Brennkraftmaschine vorzugsweise ohne jegliche externe Abgasrezirkulation betrieben.

## Patentansprüche

1. Brennkraftmaschine mit Direkteinspritzung, enthaltend
a) mindestens einen Zylinder (5) und einen darin angeordneten Kolben (20), wobei der Zylinder und der Kolben gemeinsam eine Brennkammer (1) begrenzen;
b) mindestens einen Lufteinlaß (17), welcher derart ausgebildet und am Zylinder angeordnet ist, daß eine vorzugsweise geneigte Swirl-Bewegung der Einlaßluft in der Brennkammer entsteht;
c) einen zentral an der Oberseite der Brennkammer angeordneten Kraftstoffinjektor (2) zum Einspritzen eines Kraftstoffstrahls, dessen Flüssigkeitsteilchen ein Einspritzvolumen (9) bestimmen;
d) eine zentral an der Oberseite der Brennkammer angeordnete Zündeinrichtung (3), deren Elektroden außerhalb des Einspritzvolumens des Kraftstoffinjektors liegen;
**dadurch gekennzeichnet, daß**
das Einspritzvolumen bezogen auf eine Achse des Kraftstoffinjektors (2) asymmetrisch ausgebildet ist, wobei die Elektroden der Zündeinrichtung (3) in einer Umhüllenden des vom verdampften Kraftstoff als Kraftstoffnebel eingenommenen Volumens liegen.

2. Brennkraftmaschine nach Anspruch 1,
**dadurch gekennzeichnet, daß**
die Elektroden der Zündeinrichtung (3) in dem bei einer Rotation des Einspritzvolumens (9) um die Zylinderachse (6) überstrichenen Bereich liegen.

3. Brennkraftmaschine nach Anspruch 1 oder 2,
**dadurch gekennzeichnet, daß**
die Oberseite der Brennkammer (1) die Form eines Daches aufweist.

4. Brennkraftmaschine nach einem der Ansprüche 1 bis 3,
**dadurch gekennzeichnet, daß**
die Oberseite (11) des Kolbens (20) eine Mulde (12) aufweist.

5. Brennkraftmaschine nach einem der Ansprüche 1 bis 4,
**dadurch gekennzeichnet, daß**
der Zylinder (5) mindestens ein Einlassventil (7) und mindestens ein Auslassventil (8) aufweist, welche derart angesteuert werden, dass ein Betrieb mit einer inneren Abgasrückführung möglich ist.

6. Brennkraftmaschine nach einem der Ansprüche 1 bis 5,
**dadurch gekennzeichnet, daß**
der Kraftstoffinjektor (2) im Zylinderkopf oberhalb der Brennkammer (1) von einem Kühlmittelmantel (19) umgeben ist.

7. Verfahren zur Erzeugung eines Luft-Kraftstoff-Gemisches in einer von einem Zylinder (5) und einem Kolben (20) begrenzten Brennkammer (1) einer Brennkraftmaschine mit Direkteinspritzung, wobei durch einen der Brennkammer (1) zugeordneten Lufteinlass (17) in der Brennkammer eine vorzugsweise geneigte Swirl-Bewegung erzeugt wird, und wobei mittels eines zentral an der Oberseite der Brennkammer (1) angeordneten Kraftstoffinjektors (2) ein Kraftstoffstrahl, dessen Flüssigkeitsteilchen ein Einspritzvolumen (9) bestimmen, in die Brennkammer eingespritzt wird, wobei eine zentral an der Oberseite der Brennkammer angeordnete Zündeinrichtung vorgesehen ist deren Elektroden außerhalb des Einspritzvolumens des Kraftstoff injektors liegen,
**dadurch gekennzeichnet, daß**
das Einspritzvolumen bezogen auf eine Achse des Kraftstoffinjektors (2) asymmetrisch ausgebildet ist und die Elektroden der Zündeinrichtung (3) außerhalb des Einspritzvolumens in einem von einer Umhüllenden des vom verdampften Kraftstoff als Kraftstoffnebel eingenommenen Volumens liegen.

8. Verfahren nach Anspruch 7,
**dadurch gekennzeichnet, daß**
während des Ansaugtaktes eine erste Kraftstoffmenge zur Erzeugung einer homogenen Luft-Kraftstoff-Mischung und während des Kompressionstaktes eine zweite Kraftstoffmenge zur Erzeugung einer geschichteten Luft-Kraftstoff-Mischung injiziert wird.

9. Verfahren nach Anspruch 7 oder 8,
**dadurch gekennzeichnet, daß**
in sämtlichen Betriebsarten der Brennkraftmaschine die gleichen Strömungsverhältnisse in der Brennkammer erzeugt werden.

## Claims

1. Direct injection internal combustion engine, including
a) at least one cylinder (5) and a piston (20) arranged therein, the cylinder and the piston jointly delimiting a combustion chamber (1);
b) at least one air intake port (17) which is configured and arranged on the cylinder such that a preferably inclined swirling motion of the intake air is produced in the combustion chamber;
c) a fuel injector (2) arranged at the top of the combustion chamber for injecting a fuel jet, the liquid particles of which determine an injection volume (9);
d) an ignition device (3) arranged centrally at the top of the combustion chamber, the electrodes of which ignition device (3) are located outside the injection volume of the fuel injector;
**characterized in that** the injection volume is configured asymmetrically in relation to an axis of the fuel injector (2), the electrodes of the ignition device (3) being located in an envelope of the volume occupied by the vaporized fuel as a fuel mist.

2. Internal combustion engine according to Claim 1, **characterized in that** the electrodes of the ignition device (3) are located in the region impinged upon by the injection volume (9) as it rotates about the cylinder axis (6).

3. Internal combustion engine according to Claim 1 or 2, **characterized in that** the upper side of the combustion chamber (1) is roof-shaped.

4. Internal combustion engine according to any one of Claims 1 to 3, **characterized in that** the upper face (11) of the piston (20) has a recess (12).

5. Internal combustion engine according to any one of Claims 1 to 4, **characterized in that** the cylinder (5) has at least one intake valve (7) and at least one exhaust valve (8), which are so actuated that operation with an internal exhaust gas recirculation is possible.

6. Internal combustion engine according to any one of Claims 1 to 5, **characterized in that** the fuel injector (2) is surrounded by a coolant jacket (19) in the cylinder head above the combustion chamber (1).

7. Method for producing an air/fuel mixture in a combustion chamber (1) delimited by a cylinder (5) and a piston (20) of a direct injection internal combustion engine, a preferably inclined swirling motion being generated in the combustion chamber by an air intake port (17) associated with the combustion chamber (1), a fuel jet, the liquid particles of which determine an injection volume (9), being injected into the combustion chamber by means of a fuel injector (2) arranged centrally at the top of the combustion chamber (1) and an ignition device being provided which is arranged centrally at the top of the combustion chamber and the electrodes of which are located outside the injection volume of the fuel injector, **characterized in that** the injection volume is configured asymmetrically in relation to an axis of the fuel injector (2) and the electrodes of the ignition device (3) are located outside the injection volume in a volume occupied by an envelope of the vaporized fuel as a fuel mist.

8. Method according to Claim 7, **characterized in that** during the intake stroke a first quantity of fuel is injected for generation of a homogeneous air/fuel mixture and during the compression stroke a second quantity of fuel is injected for generation of a stratified air/fuel mixture.

9. Method according to Claim 7 or 8, **characterized in that** the same flow relationships are produced in the combustion chamber in all operating modes of the internal combustion engine.

## Revendications

1. Moteur à combustion interne à injection directe comprenant :
a) au moins un cylindre (5) et un piston (20) disposé dans celui-ci, le cylindre et le piston délimitant ensemble une chambre de combustion (1) ;
b) au moins une entrée d'air (17) qui est configurée et disposée sur le cylindre de manière à produire un mouvement de tourbillonnement de préférence incliné de l'air d'admission dans la chambre de combustion ;
c) un injecteur de carburant (2) centré sur le côté supérieur de la chambre de combustion pour injecter un jet de carburant dont les gouttelettes de liquide définissent un volume d'injection (9) ;
d) un dispositif d'allumage (3) centré sur le côté supérieur de la chambre de combustion dont les électrodes se trouvent à l'extérieur du volume d'injection de l'injecteur de carburant ;
**caractérisé en ce que** le volume d'injection présente une forme asymétrique par rapport à un axe de l'injecteur de carburant (2), les électrodes du dispositif d'allumage (3) se trouvant dans une enveloppe du volume occupé par le carburant vaporisé sous la forme d'un nuage de carburant.

2. Moteur à combustion interne selon la revendication 1, **caractérisé en ce que** les électrodes du dispositif d'allumage (3) se trouvent dans la zone balayée lors d'une rotation du volume d'injection (9) autour de l'axe du cylindre (6).

3. Moteur à combustion interne selon la revendication 1 ou 2, **caractérisé en ce que** le côté supérieur de la chambre de combustion (1) présente la forme d'un toit.

4. Moteur à combustion interne selon l'une des revendications 1 à 3, **caractérisé en ce que** le côté supérieur (11) du piston (20) présente une excavation (12).

5. Moteur à combustion interne selon l'une des revendications 1 à 4, **caractérisé en ce que** le cylindre (5) présente au moins une soupape d'admission (7) et au moins une soupape d'échappement (8) qui sont commandées de telle sorte qu'un fonctionnement avec un retour interne des gaz d'échappement soit possible.

6. Moteur à combustion interne selon l'une des revendications 1 à 5, **caractérisé en ce que** l'injecteur de carburant (2) dans la culasse au-dessus de la chambre de combustion (1) est entouré d'une enveloppe de liquide de refroidissement (19).

7. Procédé pour générer un mélange air/carburant dans une chambre de combustion (1) d'un moteur à combustion interne à injection directe délimitée par un cylindre (5) et un piston (20), un mouvement de tourbillonnement de préférence incliné étant généré dans la chambre de combustion par le biais d'une entrée d'air (17) affectée à la chambre de combustion (1) et un jet de carburant dont les gouttelettes de liquide définissent un volume d'injection (9) étant injecté dans la chambre de combustion au moyen d'un injecteur de carburant (2) centré sur le côté supérieur de la chambre de combustion (1), un dispositif d'allumage, dont les électrodes se trouvent à l'extérieur du volume d'injection de l'injecteur de carburant étant prévu centré sur le côté supérieur de la chambre de combustion, **caractérisé en ce que** le volume d'injection présente une forme asymétrique par rapport à un axe de l'injecteur de carburant (2) et les électrodes du dispositif d'injection (3) se trouvent à l'extérieur du volume d'injection dans un volume occupé par une enveloppe du carburant vaporisé sous la forme d'un nuage de carburant.

8. Procédé selon la revendication 7, **caractérisé en ce qu'**une première quantité de carburant est injectée pendant le cycle d'aspiration pour produire un mélange air/carburant homogène et une deuxième quantité de carburant est injectée pendant le cycle de compression pour produire un mélange air/carburant stratifié.

9. Procédé selon la revendication 7 ou 8, **caractérisé en ce que** les mêmes conditions d'écoulement sont produites dans la chambre de combustion dans tous les modes de fonctionnement du moteur à combustion interne.
